# EUROPEAN PATENT APPLICATION

(11) **EP 3 682 728 A1**
(43) Date of publication of application: **22.07.2020**
(21) Application number: 20152606.8
(22) Date of filing: 20.01.2020
(51) Int. Cl.: A01G 9/14

(54) **DRIVE FOR A TUBE-RAIL CART AND COMBINATION OF SUCH A DRIVE AND A TUBE-RAIL CART**

(30) Priority: 21.01.2019 BE 201905036
(71) Applicant: B&A Automation BVBA, 2320 Hoogstraten (BE)
(72) Inventor: BOGAERTS, Joris, 2960 Brecht (BE)
(74) Representative: Van hunsel, Lieven M.S.

(57) **Abstract**

Drive (1) which is designed as a separate unit which can be connected to a tube-rail cart (2) and which comprises at least a driven wheel (12), an electric drive motor (13), a battery (14), control means (29), coupling device segments for connecting the drive (1) to the tube-rail cart (2), as well as a pivot axis (21) which extends perpendicular to the direction (BB') of the wheel axle (16), wherein a section (20) of the drive (1), containing the driven wheel (12), can make a rotating movement around the pivot axis (21) with the aim of suspending this section (20) in an oscillating manner on the tube-rail cart (2).

## Description

The present invention concerns a drive for a tube-rail cart.

Such a tube-rail cart may be a tube-rail trolley or a tube-rail platform, for example.

Tube-rail carts are typically used in horticultural greenhouses where they are used to work on the plants or to harvest vegetables and fruit.

In this case, the tube-rail carts run over a pair of tubes, typically heating pipes for heating the horticultural greenhouse.

According to the state of the art, such tube-rail carts are pushed over the tubes manually, the pushing person pushing his hip or thigh against the tube-rail cart and also exerting a pushing force on the tube-rail cart with both hands.

Pushing the tube-rail carts in this way is a very heavy job, especially when the tube-rail cart is loaded with harvested fruit or vegetables.

Even then, when fully loaded, the tube-rail carts usually have to travel long distances to an unloading area or stocking area, where the harvested fruit and vegetables are unloaded.

In addition, during harvest, dozens of such tube-rail carts are simultaneously in use in a single horticultural greenhouse, for example typically a dozen tube-rail carts between the rows of plants that are being picked or harvested, a dozen tube-rail carts for unloading the harvest and a dozen tube-rail carts that are queued up until they are in turn put into use for harvesting fruit or vegetables.

In short, the scale of the problem is also fairly large.

The purpose of the current invention is therefore to offer a solution to the aforementioned problem and/or other problems.

More specifically, the aim of the invention is to provide a drive for a tube-rail cart that greatly facilitates the work of pickers or plant caretakers, that can easily be applied to the already existing tube-rail carts, that is very practical to use and that does not entail excessive costs.

To this end, the present invention concerns a drive for a tube-rail cart, more specifically for moving the tube-rail cart over a pair of tubes of, for example, a horticultural greenhouse, wherein the drive is designed as a separate unit which can be connected to a tube-rail cart and which includes at least the following elements:
- a driven wheel which, by coupling the drive to the tube-rail cart, is brought into contact with one of the aforementioned tubes;
- an electric drive motor for driving the driven wheel;
- a battery for powering the electric motor;
- control means for controlling the driven wheel;
- coupling device segments for connecting the drive to the tube-rail cart; and,
- a pivot axis extending transversely to a central wheel axle of the driven wheel, wherein a section of the drive comprising the driven wheel can make a rotational movement around the pivot axis with the aim of suspending this section in an oscillating manner on the tube-rail cart.

A first major advantage of such a drive for a tube-rail cart according to the invention is of course that it is a powerful tool for moving a tube-rail cart over the tubes of a horticultural greenhouse, wherein pickers and plant caretakers are spared the heavy physical efforts involved in pushing such tube-rail carts manually.

Another advantage of such a drive for a tube-rail cart according to the invention is that it can easily be coupled to a tube-rail cart using the coupling device segments.

Another advantage of such a drive according to the invention is that the drive comprises an electric motor that is powered from a battery, so that the drive can function as a separate, autonomous unit.

It also prevents exhaust fumes from spreading in the horticultural greenhouse.

Another major advantage of such a drive according to the invention is that a part comprising the driven wheel is suspended from the tube-rail cart in an oscillating manner, so that good contact is ensured with the relevant tube over which the tube-rail cart rides.

In a preferred embodiment of a drive according to the invention, the drive furthermore preferably comprises a central section formed by a box-shaped battery unit, from which a suspended section is hinged for an oscillating movement around the aforementioned pivot axis which extends transversely to the central wheel axle, the suspended section comprising the electric drive motor and the driven wheel.

A major advantage of such an embodiment of a drive in accordance with the invention is that the weight of the electric motor ensures a good contact with the tube with which the driven wheel is brought into contact.

In addition, a pressure force is thus also exerted on the tube, which prevents the driven wheel from slipping over the tube concerned.

In yet another preferred embodiment of a drive according to the invention, the drive is made portable so that it can be carried by a person.

For this purpose, the drive is preferably provided with a handle and its weight preferably does not exceed 20 kg and more preferably it does not exceed 15 kg.

A major advantage of such a portable embodiment of a drive according to the invention is that a person can carry the drive to a tube-rail cart to be moved and connect it there to the tube-rail cart for its propulsion.

The aim here is that the drive according to the invention can be easily connected to a tube-rail cart and can just as easily be disconnected from this tube-rail cart and removed from it again.

In this way, a single drive can be used to successively drive several tube-rail carts.

This method of implementation also contributes to reducing costs, as not every tube-rail cart needs to be equipped with a drive that is permanently mounted on the tube-rail cart concerned.

Another advantage of a portable embodiment of a drive according to the invention is that the drive can be carried to a charging point for charging the battery, thus avoiding the need to carry a tube-rail cart as a whole to such a charging point.

Another preferred aspect of a drive according to the invention is that its electric drive motor has an output shaft and the driven wheel has a central wheel axle which extend in line with each other.

Preferably, according to the invention, a planetary gear transmission is provided between the output shaft of the electric drive and the driven wheel, which is built into the driven wheel.

In this way, a very compact unit is obtained that can be made with a relatively small weight in an operator-portable form.

The invention also relates to a combination of a drive according to the invention and a tube-rail cart.

According to the invention, such a combination is provided with coupling devices which are formed by the coupling device segments on the drive and by complementary coupling device segments provided on the tube-rail cart, of course with the aim of making it easy to fit the drive to the tube-rail cart.

In a preferred embodiment of such a combination of a drive and a tube-rail cart according to the invention, the coupling device segments of the drive are provided on the rear side of the battery and the coupling device segments of the tube-rail cart are provided on the frame of the tube-rail cart.

In addition, the complementary coupling device segments preferably form a dovetail joint together, and the coupling devices are preferably also provided with locking means, wherein disconnection of the drive from the tube-rail cart can be prevented by locking the coupling devices and wherein, vice versa, disconnection of the drive from the tube-rail cart can be made possible by unlocking the coupling devices.

With such an embodiment of a combination of a drive and a tube-rail cart according to the invention, the drive can very easily be connected to and disconnected from a tube-rail cart.

In addition, the locking means prevent the drive from being disconnected again after the coupling without any intervention of an operator, thus ensuring a safe operation thereof.

Such an embodiment also allows the use of such a drive for successively driving multiple tube-rail carts.

In yet another preferred embodiment of a combination of a drive and a tube-rail cart according to the invention, the tube-rail cart is provided with coupling device segments on both the front and rear side, so that a drive can be coupled both on the front side of the tube-rail cart and on the rear side thereof.

A drive according to the invention is fit for driving a tube-rail cart by exerting a pushing force against the tube-rail cart in the direction of travel.

The aforementioned embodiment of a combination of a drive and a tube-rail cart according to the invention allows the tube-rail cart to be driven both by applying a pushing force to the front of the tube-rail cart and by applying a pushing force to the rear of the tube-rail cart.

This is useful when the direction of travel needs to be reversed.

Suppose, for example, that the drive is coupled to the front of the tube-rail cart and is therefore driven in a first direction, for example during the harvesting of the fruit and/or vegetables.

After harvesting is finished, the tube-rail cart must be driven in the opposite direction, for example to move the tube-rail cart to an unloading area for unloading the vegetables and/or fruit.

This can then simply be done by first disconnecting the drive from the front of the tube-rail cart and then reinstalling the drive on the rear of the tube-rail cart.

In order to better explain the characteristics of the invention, the following preferred embodiment of a drive for a tube-rail cart, as well as a combination of a drive and a tube-rail cart according to the invention are described as an example without being restrictive in any way, with reference to the accompanying figures, in which:
Figure 1 shows in perspective of a combination according to the invention of a drive and a tube-rail cart in an uncoupled state and placed on a set of tubes;
Figure 2 in perspective shows only the drive and the wheels of the tube-rail cart from Figure 1 on the aforementioned set of tubes;
Figure 3 shows in perspective and on a larger scale the drive indicated with F2 in Figure 1;
Figures 4 and 5 show a top view and a bottom view of the drive according to arrows F4 and F5 respectively in Figure 3;
Figures 6 and 7 are side views of the drive according to arrows F6 and F7 respectively in Figure 3;
Figures 8 and 9 show views of the drive as shown in Figure 3, a front view according to arrow F8 in Figure 5 and a rear view according to arrow F9 in Figure 6 respectively;
Figures 10 and 11 are more realistic representations of the same drive shown in Figure 3, with its oscillating part in a retracted state and a swung-out state respectively;
Figures 12 and 13 show, in perspective and as enlarged, the oscillating part indicated by F12 and F13 respectively in Figures 10 and 11, in the respective state.

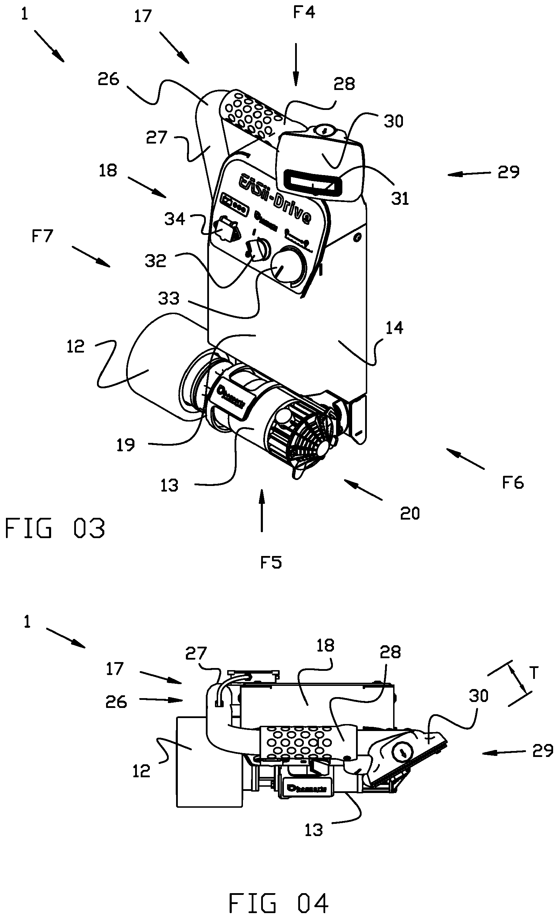

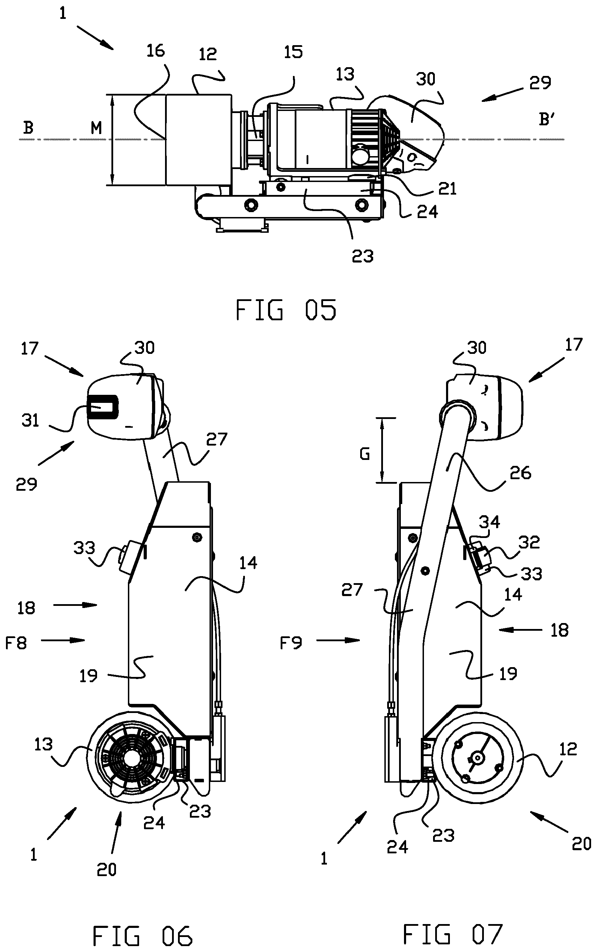

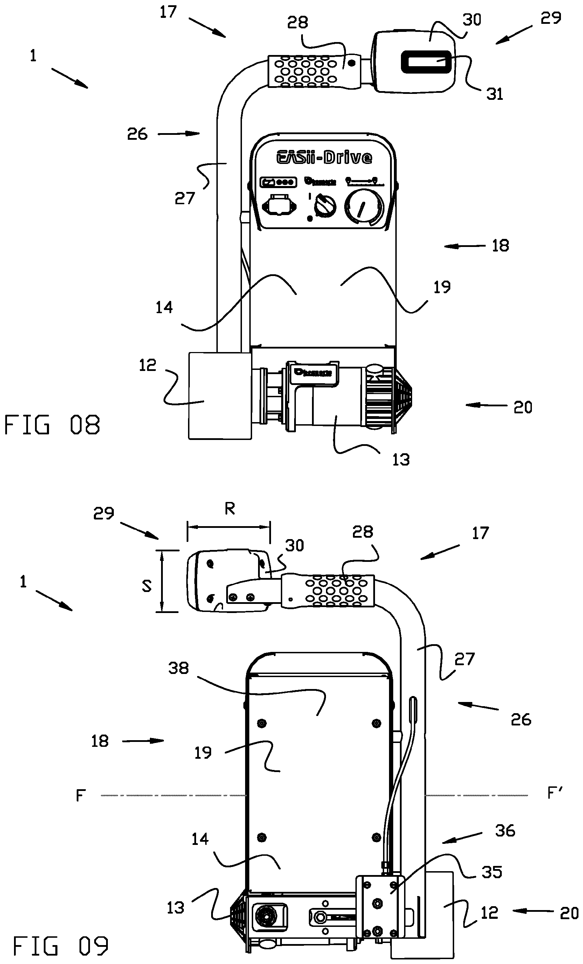

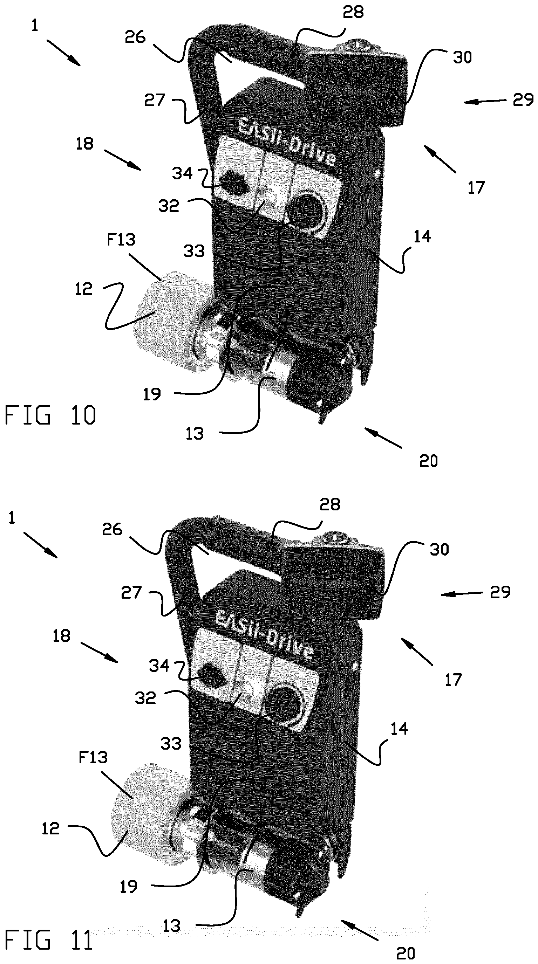

The drive 1 according to the invention, shown in Figures 3 to 11, is designed to move a tube-rail cart 2 over a pair of tubes 3 and 4 of, for example, a horticultural greenhouse.

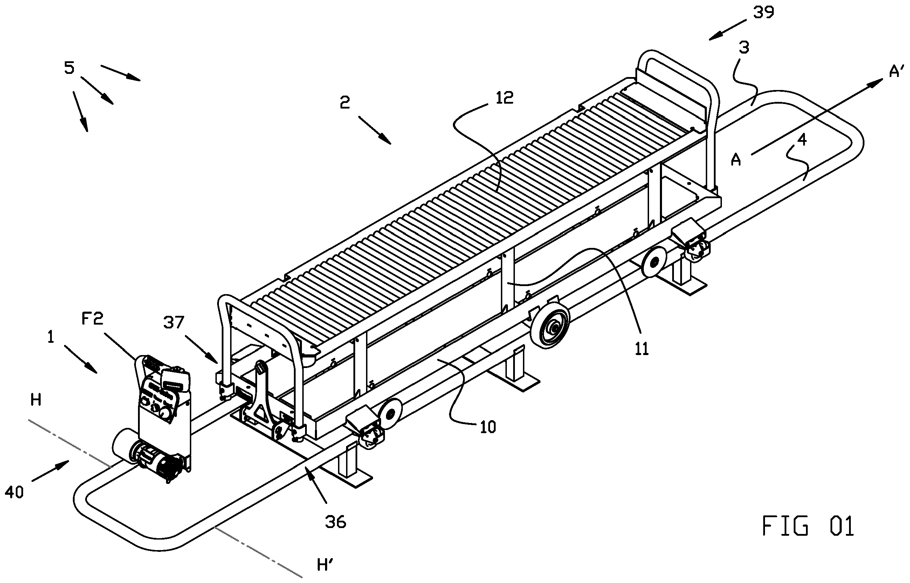

A combination 5 of a drive 1 according to the invention and a tube-rail cart 2, which is shown in Figure 1, also forms the subject of this invention.

As is clearly illustrated in Figure 1, the drive 1 is designed as a separate unit that can easily be connected to the tube-rail cart 2.

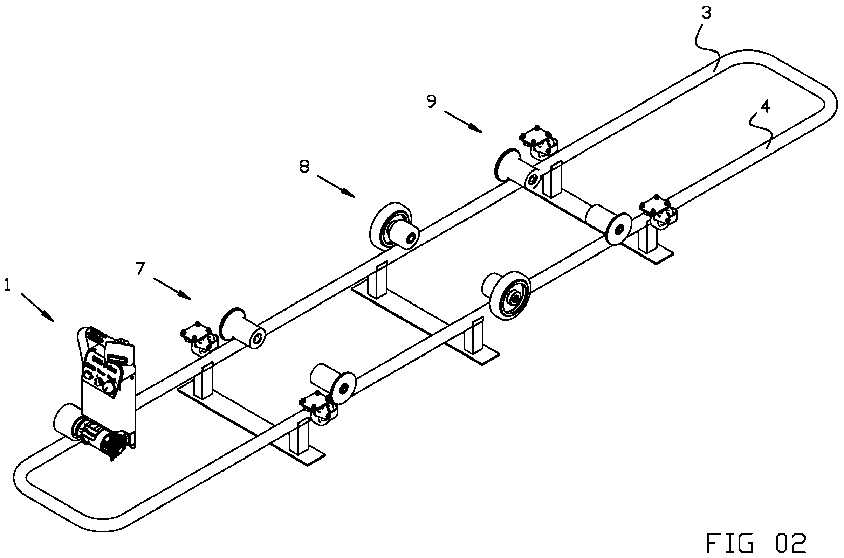

The tube-rail cart 2 is provided with an undercarriage 6 which is supported on the pair of tubes 3 and 4 by means of, in this case, three pairs of wheels 7, 8 and 9 which are permanently fitted under the undercarriage 6, which is illustrated in Figure 2.

The tube-rail cart 2 also contains a platform 10 which is connected to the chassis 6 via a frame 11.

The platform 10 can, for example, serve as a loading platform for stacking boxes or crates with fruit or vegetables.

The platform 10 can also be used by an operator to stand on while working on plants and it can be made such that it can move up and down for this purpose in certain embodiments, for example by means of a scissor mechanism or similar.

Of course, the actual embodiment of the tube-rail cart 2 can be completely different from the one shown in the figures.

The drive 1 comprises a driven wheel 12 that is brought into contact with one of the aforementioned tubes 3 or 4 by connecting the drive 1 to the tube-rail cart 2.

In the coupled state of the drive 1, this driven wheel 12 thus forms an additional wheel on the tube-rail cart 2 with which a pushing force can be exerted against the tube-rail cart 2 in order to make it move in a specific direction of travel AA'.

The drive 1 is further provided with an electric drive motor 13 for driving the driven wheel 12.

This electric motor 13 is powered by a battery 14.

This battery 14 preferably has a capacity to ensure the drive autonomy for one day.

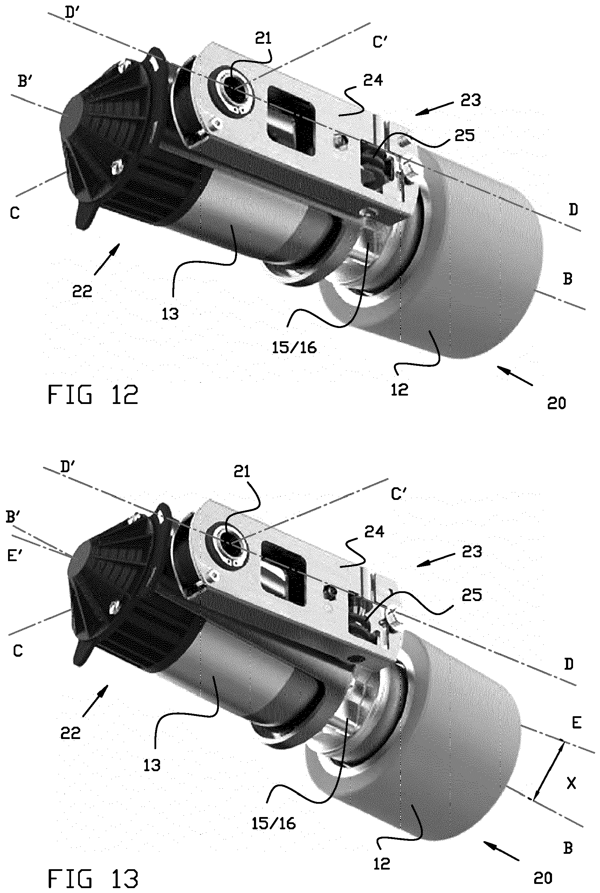

The assembly, consisting of the electric drive motor 13 and the driven wheel 12, is shown in more detail in Figures 12 and 13.

The electric drive motor 13 has an output shaft 15 and the driven wheel 12 has a central wheel axle 16, which extend in line with each other in a direction BB'.

Between the output shaft 15 of the electric drive 13 and the driven wheel 12, a planetary gear transmission is preferably provided which is built into the driven wheel 12 as much as possible and preferably all the way.

In this way, an extremely compact drive 1 is realized.

According to the invention, the outer diameter M of the driven wheel should preferably not exceed 12 cm.

In the embodiment shown, the drive is 1 made portable, so that a person can carry it.

For this purpose, the drive 1 is provided with a handle 17.

According to the invention, the weight of the drive is preferably also kept as low as possible.

This weight should preferably not exceed 20 kg or even 15 kg.

The drive 1 shown in the figures further comprises a central section 18 formed by a box-shaped battery unit 19, from which a suspended section 20 is hinged for an oscillating movement around a pivot axis 21.

This pivot axis 21 extends in a direction CC' perpendicular to the direction BB' of the wheel axle 16 and the output shaft 15.

In the coupled state of the drive 1 to the tube-rail cart 2, direction CC' of the pivot axis 21 is parallel to the direction of travel AA'.

The suspended section 20 can make a relatively limited rotational movement around this pivot axis 21 with the aim of hanging this suspended section 20 in an oscillating manner on the tube-rail cart 2.

As illustrated in Figures 12 and 13, the suspended section 20 can oscillate over an angle X between a retracted state shown in Figure 12 and a swung-out state shown in Figure 13.

The maximum value of the angle X in this case is about 10°, but in other embodiments the suspended section 20 can swing out over a greater angle X.

In the embodiment shown in the figures, the suspended section 20 comprises the driven wheel 12 and the electric drive motor 13.

The pivot axis 21 herein engages the electric drive motor 13 on the side 22 thereof farthest away from the driven wheel 12.

Figures 12 and 13 also show that in the embodiment discussed here, the suspended section 20 is suspended by means of a fastening element 23 which is mounted at the bottom on the central section 18 of the drive 1.

This fastening element 23 is made in the shape of a hollow, metal flat box or tube 24, in which among others the rotating pivot axis 21 is provided.

This fastening element 23 extends lengthwise in a direction DD' which, in the mounted state of this fastening element 23 on the drive 1, is parallel to the width direction FF' of the drive 1.

In the retracted state of the suspended section 20, the output shaft 15 and the wheel axle 16 extend parallel to the direction DD', as shown in figure 12.

When the suspended section 20 is swung out, the output shaft 15 and the wheel axle 16 make an angle X with the parallel EE' to the direction DD' which is situated in the plane of rotation of this output shaft 15 and wheel axle 16, as shown in Figure 13.

In the fastening element 23 there is also a spiral spring 25 which exerts a compressive force between the fastening element 23 and the suspended section 20 and thus attempts to bring the suspended section 20 into the swung-out state.

After connecting the drive 1 to the tube-rail cart 2, the direction DD' according to the length of the fastening element 23 is parallel to a horizontal direction HH', at least insofar as the tubes 3 and 4 are arranged in a horizontal plane, which is normally the case in a horticultural greenhouse.

This horizontal direction HH' is parallel to the width direction FF' of the drive 1 and extends transversely to the direction of travel AA' of the tube-rail cart 2 or thus transversely to the direction in which the tubes 3 and 4 extend.

The oscillating suspension of the assembly, consisting of the driven wheel 12 and the electric drive motor 13 at the central section 18 of the drive, ensures good contact with the respective tube 3.

The weight of the electric drive motor 13 as well as the pressure force exerted by the spiral spring 25 herein ensure that the driven wheel 12 is pressed firmly against the tube 3, so that the drive force from the drive 1 can find sufficient reaction force on the tube 3 and can thus be converted into a force for propelling the tube-rail cart 2.

In the example shown, the handle 17 of the drive 1 is formed by an L-shaped tube 26 with one leg 27 fitted laterally against the central section 18 and the other leg 28 forming the handle 17 which extends over the width of the central section 18 at some distance G thereof.

The drive 1 is also equipped with control means 29 for controlling the electric drive motor 13 and thus the driven wheel 12.

In the embodiment shown in the figures, these control means 29 include a buffer 30 intended to be knocked against by the body of a driver, more specifically at the level of the thigh or the hips.

The buffer 30 is preferably formed by a rubber air bellows in which switches 31 are provided for switching the drive 1 on and off, when the buffer 30 is being knocked against and when it is no longer knocked against by the body respectively.

The buffer 30 is preferably mounted on the handle 17, but of course it is not excluded according to the invention to provide the buffer on other parts of the drive 1.

In yet another preferred embodiment of a drive according to the invention, the buffer 30 is embodied such that its position on the drive 1, or in this case more specifically on the handle 17, can be easily adjusted by displacing or rotating it.

The buffer 30 preferably has a width R of approximately 140 mm, a height S of approximately 70 mm and a thickness T of approximately 50 mm, although of course embodiments in which the buffer 30 has other dimensions are not excluded from the invention.

Furthermore, according to the invention, the drive 1 is preferably also provided with switches 32 for switching the drive 1 on and off, with adjusting means 33 for adjusting the speed at which the driven wheel 12 is driven and with charging devices 34 for charging the battery 14.

According to the invention, the drive 1 is also provided with coupling device segments 35 for coupling the drive 1 to the tube-rail cart 2.

More specifically, a combination 5 according to the invention of a drive 1 and a tube-rail cart 2 is provided with coupling devices 36 formed by the coupling device segments 35 on the drive 1 and by complementary coupling device segments 37 provided on the tube-rail cart 2.

These coupling device segments 35 of the drive 1 are preferably provided on the rear side 38 of the battery 14 and the complementary coupling device segments 37 of the tube-rail cart 37 are preferably provided on the frame 11 of the tube-rail cart 2, although it is not excluded according to the invention to provide the coupling device segments 35 and 37 in other places.

In a preferred embodiment of a combination 5 according to the invention, the complementary coupling device segments 35 and 37 together form a dovetail joint, wherein the coupling devices 36 are also provided with locking devices.

The aim here is that the disconnection of the drive 1 from the tube-rail cart 2 can be prevented by locking the coupling devices 36 with these locking devices.

Conversely, the disconnection of the drive 1 from the tube rail cart 2 can be enabled by unlocking the coupling devices 36 with these locking devices.

This ensures a safe operation of the drive 1.

An interesting embodiment of a combination 5 of a drive 1 and a tube-rail cart 2 consists in providing the tube-rail cart 2 with coupling device segments 37 on both the front side 39 and the rear side 40, so that a drive 1 can be coupled on both the front side 39 of tube-rail cart 2 and on its rear side 40.

In this way, the travel direction AA' can easily be reversed, as already explained in the introduction.

Another advantageous feature of the invention is to make the handle 17 such that it can be operated to control the coupling device segments 35 and/or the aforementioned locking devices.

Preferably, the coupling device segments 35 and/or locking devices are controlled herein by a rotating movement on the handle 17.

In the embodiment described above, it is clearly the intention to be able to easily connect and disconnect the drive 1 according to the invention to and from a tube-rail cart 2, for example in order to fix the drive in another place on the tube-rail cart 2 or to another tube-rail cart 2.

In another application, such a drive 1 according to the invention can of course also be used to serve as a permanent part of the tube-rail cart 2, in which case parts such as the handle 17 and the control means 29 in the form of a buffer 30 do not necessarily have to be applied.

Furthermore, in the latter case, it is no longer necessary to design the drive 1 as an assembly that can be carried by an operator.

The invention is by no means limited to the embodiment of a drive 1 and a combination 5 of a drive 1 and a tube-rail cart 2 according to the invention, described as an example and illustrated with reference to the figures; on the contrary, such a drive 1 and such a combination 5 of a drive 1 and a tube-rail cart 2 may be realised in other ways while still remaining within the scope of the invention.

## Claims

1. Drive (1) for a tube-rail cart (2), in particular for moving the tube-rail cart (2) over a pair of tubes (3, 4) of, for example, a horticultural greenhouse, **characterised in that** the drive (1) is designed as a separate unit that can be connected to a tube-rail cart (2) and comprising at least the following elements:
- a driven wheel (12) which is brought into contact with one of the aforementioned tubes (3,4) by coupling the drive (1) to the tube-rail cart (2);
- an electric drive motor (13) for driving the driven wheel (12);
- a battery (14) for powering the electric motor (13);
- control means (29) for controlling the driven wheel (12) ;
- coupling device segments for coupling the drive (1) to the tube-rail cart (2); and,
- a pivot axis (21) extending in a direction (CC') perpendicular to a central wheel axle (BB') of the driven wheel (12), wherein a section (20) of the drive (1), comprising the driven wheel (12), can make a rotating movement around the pivot axis (21) with the aim of suspending this section (20) in an oscillating manner on the tube-rail cart (2).

2. Drive (1) according to claim 1, **characterised in that** the drive (1) is portable for a person and is provided to this end with a handle (17).

3. Drive (1) according to claim 1 or 2, **characterised in that** its weight does not exceed 20 kg and more preferably does not exceed 15 kg.

4. Drive (1) according to one or several of the preceding claims, **characterised in that** the drive (1) comprises a central section (18) formed by a box-shaped battery unit (19), to which a suspended section (20) is hinged for an oscillating movement around said pivot axis (21) which extends in a direction (BB') perpendicular to the central wheel axle (BB'), the suspended section (20) comprising the electric drive motor (13) and the driven wheel (12).

5. Drive (1) according to one or several of the preceding claims, **characterised in that** the electric drive motor (13) has an output shaft (15) and the driven wheel (12) has a wheel axle (16), extending according to a direction (BB') in line with each other.

6. Drive (1) according to claim 5, **characterised in that** between the output shaft (15) of the electric drive (13) and the driven wheel (12), a planetary gear transmission is provided that is built into the driven wheel (12).

7. Drive (1) according to claim 6, **characterised in that** the outer diameter (M) of the driven wheel (12) does not exceed 12 cm.

8. Drive (1) according to claims 2 and 4, **characterised in that** the handle (17) is formed by an L-shaped tube (26) arranged laterally against the central section (18) with one leg (27) and whose other leg (28) forms the handle (17) that extends across the width of the central section (18) at some distance (G) thereof.

9. Drive (1) according to claim 2 or 8, **characterised in that** the handle (17) is also operable for controlling the coupling device segments (35).

10. Drive (1) according to claim 9, **characterised in that** the coupling device segments (35) are controlled by means of a rotating movement on the handle (17).

11. Drive (1) according to one or several of the preceding claims, **characterised in that** the control means (29) comprise a buffer (30) designed to be knocked against by the body of a driver, in particular at the level of the thigh or the hips.

12. Drive (1) according to claim 11, **characterised in that** the buffer (30) is formed by a rubber air bellows in which switches (31) are provided for switching the drive (1) on and off, respectively when the buffer (30) is being knocked against and is no longer knocked against by the body respectively.

13. Drive (1) according to claims 2 and 11, **characterised in that** the buffer (30) is provided on the handle (17).

14. Drive (1) according to one or several of claims 11 to 13, **characterised in that** the position of the buffer (30) can be adjusted by moving or rotating it.

15. Drive (1) according to one or several of the preceding claims, **characterised in that** the drive (1) is provided with switches (32) for switching the drive (1) on and off, with adjusting means (33) for adjusting the speed at which the driven wheel (12) is driven and with charging means (34) for charging the battery (14).

16. Combination (5) of a drive (1) according to one or several of the preceding claims and a tube-rail cart (2), **characterised in that** the combination (5) is provided with coupling devices (36) formed by the coupling device segments (35) on the drive (1) and by complementary coupling device segments (37) provided on the tube-rail cart (2).

17. Combination (5) according to claim 16, **characterised in that** the coupling device segments (35) of the drive (1) are provided on the rear side (38) of the battery (14) and **in that** the coupling device segments (37) of the tube-rail cart (2) are provided on the frame (11) of the tube-rail cart (2).

18. Combination (5) according to claim 17, **characterised in that** the complementary coupling device segments (35, 37) together form a dovetail joint and wherein the coupling devices (36) are also provided with locking means wherein the disconnection of the drive (1) from the tube-rail cart (2) can be prevented by locking the coupling devices (36) and wherein, vice versa, the disconnection of the drive (1) from the tube-rail cart (2) can be made possible by unlocking the coupling devices (36).

19. Combination (5) according to one or several of claims 16 to 18, **characterised in that** the tube-rail cart (2) is provided with coupling device segments (37) both on the front side (39) and on the rear side (40), so that a drive (1) can be connected to the front side (39) of the tube-rail cart (2) as well as to its rear side (40) .
